(19) Europäisches Patentamt
European Patent Office
Office européen des brevets

(11) EP 4 716 149 A1

(12) EUROPEAN PATENT APPLICATION

(43) Date of publication:
**25.03.2026 Bulletin 2026/13**

(21) Application number: **25175904.9**

(22) Date of filing: **13.05.2025**

(51) International Patent Classification (IPC):
***H04L 9/08*** *(2006.01)*

(52) Cooperative Patent Classification (CPC):
**H04L 9/0855**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.09.2024 KR 20240128094**

(71) Applicant: **Korea Institute of Science & Technology Information**
**Daejeon 34141 (KR)**

(72) Inventors:
- **LEE, Chan Kyun**
  **34201 Daejeon (KR)**
- **LIM, Hyun Kyo**
  **30091 Sejong-si (KR)**
- **LEE, Won Hyuk**
  **30062 Sejong-si (KR)**

(74) Representative: **Isarpatent**
**Patent- und Rechtsanwälte**
**Barth Hassa Peckmann & Partner mbB**
**Friedrichstraße 31**
**80801 München (DE)**

# (54) QUANTUM CRYPTOGRAPHY SERVICE APPARATUS AND QUANTUM CRYPTOGRAPHY COMMUNICATION SERVICE METHOD

(57) The present disclosure relates to a method for minimizing the latency of quantum key support for end-to-end quantum cryptography services of a service node in quantum cryptography services.

FIG. 1

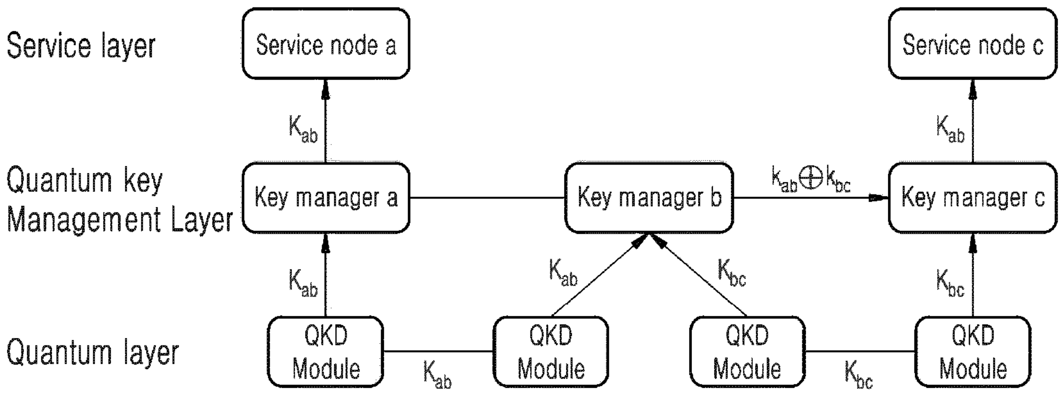


EP 4 716 149 A1

## Description

### BACKGROUND OF THE INVENTION

#### 1. Field of the invention

The present disclosure relates to a method for minimizing the latency of quantum key support for end-to-end quantum cryptography services of a service node in quantum cryptography services.

#### 2. Description of the Prior Art

Quantum cryptography communication is a method of utilizing quantum keys generated by utilizing the quantum mechanical properties of quantum to encrypt and decrypt communications.

The ITU-T (International Telecommunication Standardization Sector) international standard (ITU.T Y.3800) defines a hierarchical structure including a quantum layer, a quantum key management layer, and a service layer for a quantum cryptography communication network.

The quantum layer includes a quantum key distribution (QKD) module, and a pair of quantum key distribution modules connected through a quantum link generate and share a quantum key through an arbitrary quantum key distribution protocol.

Afterwards, the quantum key distribution module transmits the corresponding quantum key to the key manager (KM) of the quantum key management layer, and the key manager recombines the quantum key and transmits it to a service node of the service layer.

The service node performs an end-to-end quantum cryptography service using the received quantum key.

Meanwhile, when a quantum cryptography service request occurs between end-to-end service nodes in the quantum cryptography communication network, the service node may request an end-to-end quantum key from the connected key manager.

At this time, the difference between the time the quantum key is requested and the time the quantum key is actually received may be defined as key response latency, and the key response latency is the main user-perceived performance of the quantum cryptography service.

In particular, the ITU-T standardization group defines the key response latency as main quantum cryptography service performance measures through the Y.3807 standardization document.

In this regard, quantum key relay is an essential technology for quantum cryptography service between long-distance service nodes.

However, the quantum key relay function requires calculations such as XOR (exclusive OR) between quantum keys, which causes support latency for quantum key requests in the service layer.

That is, as the distance between end-to-end service nodes increases, multiple relay calculations are required between multiple quantum keys, which may cause very long quantum key support latency, leading to performance degradation of quantum cryptography services.

### SUMMARY OF THE INVENTION

The present disclosure has been made in consideration of the above circumstances, and the present disclosure is to minimize the latency of quantum key support for end-to-end quantum cryptography services of service nodes in quantum cryptography services.

A quantum cryptography service apparatus according to an embodiment of the present disclosure includes: a memory including instructions; and a processor configured to generate, by executing the instructions, for all key managers in a quantum key management layer, an adjacent quantum key shared with other key managers directly connected to each key manager, and, when a pair of specific key managers not directly connected to each other are determined from connection status between key managers, generate a preliminary quantum key shared between the pair of specific key managers through a quantum key relay that consumes key manager-specific adjacent quantum keys connecting the pair of specific key managers before a quantum cryptography service request occurs in the service layer.

Specifically, the processor may be configured to transmit, when a quantum cryptography service request occurs, a preliminary quantum key or a quantum key generated through a quantum key relay that consumes a preliminary quantum key as a service quantum key for an end-to-end quantum cryptography service of a service node.

Specifically, the processor may be configured to generate, for all key managers in the quantum key management layer, preliminary quantum keys shared with all other key managers, respectively, that are not directly connected to each key manager.

Specifically, the processor may be configured to generate a preliminary quantum key between a pair of key managers at pre-defined distances (hops) in the quantum key management layer.

Specifically, the processor may be configured to generate preliminary quantum keys between all pairs of key managers directly connected to service nodes of the service layer in the quantum key management layer.

Specifically, the processor may be configured to generate a preliminary quantum key between a pair of key managers directly connected to service nodes at pre-defined distances (hops) between service nodes in the service layer.

Specifically, the processor may be configured to generate a preliminary quantum key for a pair of key managers that make the number of quantum key relays using preliminary quantum keys less than a threshold value when generating quantum keys between any pair of key managers in the quantum key management layer.

A quantum cryptography communication service method performed in a quantum cryptography service apparatus according to an embodiment of the present disclosure may include: generating, for all key managers in a quantum key management layer, an adjacent quantum key shared with other key managers directly connected to each key manager; and when a pair of specific key managers not directly connected to each other are determined from connection status between key managers, generating a preliminary quantum key shared between the pair of specific key managers through a quantum key relay that consumes key manager-specific adjacent quantum keys connecting the pair of specific key managers before a quantum cryptography service request occurs in the service layer.

Specifically, the method may further include transmitting, when a quantum cryptography service request occurs, a preliminary quantum key or a quantum key generated through a quantum key relay that consumes a preliminary quantum key as a service quantum key for an end-to-end quantum cryptography service of a service node.

Specifically, the generating of the preliminary quantum key may include generating, for all key managers in the quantum key management layer, preliminary quantum keys shared with all other key managers, respectively, that are not directly connected to each key manager.

Specifically, the generating of the preliminary quantum key may include generating a preliminary quantum key between a pair of key managers at pre-defined distances (hops) in the quantum key management layer.

Specifically, the generating of the preliminary quantum key may include generating preliminary quantum keys between all pairs of key managers directly connected to service nodes of the service layer in the quantum key management layer.

Specifically, the generating of the preliminary quantum key may include generating a preliminary quantum key between a pair of key managers directly connected to service nodes at pre-defined distances (hops) between service nodes in the service layer.

Specifically, the generating of the preliminary quantum key may include generating a preliminary quantum key for a pair of key managers that make the number of quantum key relays using preliminary quantum keys less than a threshold value when generating quantum keys between any pair of key managers in the quantum key management layer.

Accordingly, in the quantum cryptography service apparatus and quantum cryptography communication service method of the present disclosure, a preliminary-quantum key generation method for pre-generating quantum keys between long-distance nodes in quantum cryptography service is applied, thereby reducing the quantum key support latency due to quantum key relay, which is a disadvantage of quantum cryptography communication, compared to existing cryptographic communications, to attain low-latency quantum cryptography services and efficiently utilizing expensive quantum resources.

## BRIEF DESCRIPTION OF THE DRAWINGS

The above and other aspects, features and advantages of the present disclosure will be more apparent from the following detailed description taken in conjunction with the accompanying drawings, in which:

FIG. 1 is a diagram illustrating an example of a quantum key relay method according to an embodiment of the present disclosure.

FIGS. 2 and 3 are diagrams illustrating an example of a quantum cryptography communication network according to a prior art.

FIG. 4 is a diagram illustrating the configuration of a quantum cryptography service apparatus according to an embodiment of the present disclosure.

FIGS. 5 and 6 are diagrams illustrating an example of a preliminary-quantum key generation method according to a first embodiment of the present disclosure.

FIGS. 7 and 8 are diagrams illustrating an example of a preliminary-quantum key generation method according to a second embodiment of the present disclosure.

FIGS. 9 and 10 are diagrams illustrating an example of a preliminary-quantum key generation method according to a third embodiment of the present disclosure.

FIGS. 11 and 12 are diagrams illustrating an example of a preliminary-quantum key generation method according to a fourth embodiment of the present disclosure.

FIGS. 13 and 14 diagrams illustrating an example of a preliminary-quantum key generation method according to a fifth embodiment of the present disclosure.

FIG. 15 is a flowchart illustrating a quantum cryptography communication service method according to an embodiment of the present disclosure.

## DETAILED DESCRIPTION OF THE EXEMPLARY EMBODIMENTS

Hereinafter, the embodiments disclosed in this specification will be described in detail with reference to the attached drawings. Regardless of the reference numerals, identical or similar elements will be assigned the same reference numerals, and redundant descriptions thereof will be omitted. The terms "module" and "unit" used for elements in the following description are assigned or used interchangeably only for the convenience of drafting the specification, and do not have distinct meanings or roles in themselves. In addition, in describing the embodiments disclosed in this specification, a detailed description of a related known technology, which may obscure the subject matter of the embodiments disclosed in this specification, will be omitted. In addition, the attached drawings are only intended to facilitate easy understanding of the embodiments disclosed in this specification, and the technical ideas disclosed in this specification are not limited to the attached drawings, and should be understood to include all modifications, equivalents, or substitutes included in the scope of the disclosure.

Although "first," "second," etc. may be used to describe various components, the components are not limited to such terms. The terms are used only for the purpose of distinguishing one element from another.

The expression "one element is 'connected' or 'fastened' to another element should be understood not only that the two elements are directly connected or fastened to each other, but also that another element may be provided between the two elements. On the other hand, the expression "one element is 'directly connected' or 'directly fastened' to another element should be understood that there is no another element therebetween.

Hereinafter, a preferred embodiment of the present disclosure will be described with reference to the attached drawings.

An embodiment of the present disclosure describes a technology for quantum cryptography services.

In current quantum technology, there is a distance limitation between neighboring quantum key distribution modules in a quantum layer.

To overcome this, a quantum cryptography communication network includes a trusted node including a key manager and quantum key distribution modules.

The key manager of the trusted node generates a quantum key capable of being shared between long-distance nodes through a relay between quantum keys received from the quantum key distribution modules.

In this regard, FIG. 1 illustrates an example of a quantum key relay method.

The service layer in FIG. 1 may include service nodes a and c, and in the case where the physical distance between the service nodes a and c is long, a trusted node including a key manager b and quantum key distribution modules connected to the key manager b.

At this time, the key manager b may be connected to key managers a and c.

In addition, the quantum key distribution modules connected to the key manager b may be connected to a quantum key distribution module connected to the key manager a and a quantum key distribution module connected to the key manager c, respectively, so that they may share quantum keys in the quantum layer.

That is, the key manager a and the key manager b may share the same key $k_{ab}$ through the quantum key distribution protocol, and the key manager b and the key manager c may also share a quantum key $k_{bc}$.

The key manager a transmits $k_{ab}$ to the service node a, and the key manager b calculates XOR (⊕: exclusive OR) between $k_{ab}$ and $k_{bc}$ and transmits a result value to the key manager c.

In this case, the key manager c calculates $k_{ab} \oplus k_{bc} \oplus k_{bc}$, restores $k_{ab}$, and transmits it to the service node c.

Therefore, since both the service nodes a and c share the same quantum key $k_{ab}$, the quantum cryptography service between the service nodes a and c may be attained by utilizing the corresponding symmetric key.

Meanwhile, when a quantum cryptography service request occurs between end-to-end service nodes in a quantum cryptography communication network, the service node may request an end-to-end quantum key from a connected key manager.

At this time, the difference between the time when the quantum key is requested and the time when the quantum key is actually received may be defined as key response latency, and the key response latency is the main user-perceived performance of quantum cryptography services.

In particular, the ITU-T standardization group defines the key response latency as main quantum cryptography service performance measures through the Y.3807 standardization document.

In this regard, quantum key relay is an essential technology for quantum cryptography service between long-distance service nodes.

However, the quantum key relay function requires calculations such as XOR (exclusive OR) between quantum keys, which causes support latency for quantum key requests in the service layer.

That is, as the distance between end-to-end service nodes increases, multiple relay calculations are required between multiple quantum keys, which may cause very long quantum key support latency, leading to performance degradation of quantum cryptography services.

To help understand the explanation, referring to the prior art, for example, as shown in FIG. 2, a pair of quantum key distribution modules connected to each other share a symmetric quantum key (hereinafter referred to as an "adjacent quantum key") through an arbitrary quantum key distribution protocol and transmit it to a key manager, and the key manager stores the adjacent quantum key in a key pool inside the key manager.

In other words, for all key managers in the quantum key management layer of the quantum cryptography communication network, key managers directly connected to each key manager are searched for/calculated, and then the key pool of each key manager stores a key shared with the key manager directly connected to the corresponding key manager.

In this regard, FIG. 3 may show, for example, a quantum cryptography communication network structure including a service layer including three service nodes a, c, and e, a quantum key management layer including five key managers a, b, c, d, and e, and a quantum layer including eight quantum key distribution modules.

For convenience of explanation, a linear quantum cryptography communication network topology structure is illustrated in Fig. 3, but it is not limited thereto.

In the above structure, each service node is connected to one key manager, and each key manager is connected to one or more quantum key distribution modules.

The key manager b, the key manager d, and the quantum key distribution modules connected to the above key managers may be configured as trusted nodes to overcome the distance limitation of the quantum key distribution protocol.

In this case, the key pool of each key manager stores only the quantum key transmitted by the quantum key distribution module connected to the corresponding key manager.

For example, the key pool of the key manager c stores adjacent quantum keys $k_{bc}$ and $k_{cd}$ transmitted by the quantum key distribution modules connected to the corresponding key manager.

In the above example, when a quantum cryptography service request occurs between the service nodes a and e, the end-to-end quantum key (hereinafter referred to as a "service quantum key") between the corresponding service nodes may be generated through a quantum key relay that consumes an adjacent quantum key $k_{ab}$ between the key managers a and b, an adjacent quantum key $k_{bc}$ between the key managers b and c, an adjacent quantum key $k_{cd}$ between the key managers c and d, and an adjacent quantum key $k_{de}$ between the key managers d and e.

As a result, the multiple quantum key relay calculations required to support the service quantum key of the service nodes in the quantum cryptography service may cause a long support latency for the quantum key request, and this quantum key support latency may degrade the user-perceived performance of the quantum cryptography communication service.

Therefore, an embodiment of the present disclosure proposes a new method capable of minimizing the quantum key support latency through a preliminary-quantum key generation method, and hereinafter, a quantum cryptography service apparatus (not shown) for realizing the method will be described.

Before the explanation, the preliminary-quantum key generation method may be understood as a method of pre-generating a quantum key between two arbitrary long-distance key managers through a quantum key relay method and sharing it between the key managers even before a quantum cryptography service request utilizing a quantum key occurs, thereby quickly providing a quantum key when a quantum cryptography service request occurs in the future.

The preliminary-quantum key generation method according to an embodiment of the present disclosure may be performed during idle time for which no quantum cryptography service occurs, may be performed periodically in a certain cycle capable of being set by the user, and may be performed in particular by considering the status of quantum key resources shared between each pair of key managers.

Meanwhile, the quantum cryptography service apparatus (not shown) according to an embodiment of the present disclosure may be implemented in the form of a computing device or server equipped with software **(e.g., an** application) in the quantum cryptography communication network, and when implemented in the form of a server, it may be implemented in the form of, for example, a web server, a database server, a proxy server, etc., and may have one or more pieces of software of various types installed to enable a network-load distribution mechanism or a service device to operate on the Internet or other networks, so that it may be implemented as a computerized system.

Hereinafter, the quantum cryptography service apparatus (not shown) will be described by assigning a new reference number 100 thereto.

FIG. 4 is a diagram illustrating the configuration of a quantum cryptography service apparatus 100 according to an embodiment of the present disclosure.

As shown in FIG. 4, the quantum cryptography service apparatus 100 according to an embodiment of the present disclosure may be configured to include a memory including instructions, and a processor configured to execute the instructions in the memory.

In particular, the processor according to an embodiment of the present disclosure may be configured to include an adjacent-key generator 110, a preliminary-key generator 120, and a service-key generator 130 depending on the functions implemented by the execution of instructions.

As described above, the quantum cryptography service apparatus 100 according to an embodiment of the present disclosure may minimize the quantum key support latency due to a quantum key relay by applying the preliminary quantum key generation method through the aforementioned configuration. Hereinafter, respective functions of the processor for implementing the above will be described in more detail.

The adjacent-key generator 110 serves to execute a function of generating an adjacent quantum key.

More specifically, the adjacent-key generator 110 generates, for all key managers of the quantum key management layer, an adjacent quantum key shared with another key manager directly connected to each key manager.

Referring to FIG. 3 above, in the case where there are five key managers a, b, c, d, and e in the quantum key management layer, an adjacent quantum key $k_{ab}$ between the key managers a and b, an adjacent quantum key $k_{bc}$ between the key managers b and c, an adjacent quantum key $k_{cd}$ between the key managers c and d, and an adjacent quantum key $k_{de}$ between the key managers d and e may be generated and stored in the key pools of the respective key managers.

The preliminary-key generator 120 serves to execute a function of generating preliminary quantum keys.

More specifically, the preliminary-key generator 120 generates a preliminary quantum key shared between two long-distance key managers through a quantum key relay that consumes adjacent quantum keys.

At this time, when a pair of specific key managers that are not directly connected to each other are determined from the connection status between key managers, the preliminary-key generator 120 may generate a preliminary quantum key through a quantum key relay that consumes key manager-specific adjacent quantum keys that connect the pair of key managers before a quantum cryptography service request occurs in the service layer.

Meanwhile, since the quantum key resource generated by the quantum key distribution module is a very limited resource, efficient use is required. In particular, in real quantum cryptography communication, the lifetime of the quantum key is configured, and the quantum key whose lifetime has expired is discarded.

Similarly, since the method of generating a preliminary quantum key between long-distance key managers consumes a large number of quantum keys, if the preliminary quantum key is not requested and the corresponding quantum key is discarded after its lifetime, this may reduce the quantum key resource efficiency of the quantum cryptography communication.

Therefore, in an embodiment of the present disclosure, a first embodiment of generating preliminary quantum keys between all pairs of key managers may be adopted as a method of improving the quantum key resource efficiency of the quantum cryptography communication.

That is, the preliminary-key generator 120 generates preliminary quantum keys to be shared with all other key managers that are not directly connected to each key manager for all key managers of the quantum key management layer.

In other words, the preliminary-key generator 120, as shown in FIG. 5, searches for/calculates all key managers in the quantum key management layer of the quantum cryptography communication network, and then the key pool of each key manager stores preliminary quantum keys that the key manager shares with all other key managers.

In this case, a method may be applied to maintain the same number of preliminary quantum keys generated between pairs of key managers.

In addition, the number of preliminary quantum keys may vary depending on the distance between the key managers. For example, a method may be applied to pre-generate a large number of quantum keys between key managers located at short distances, and pre-generate a small number of quantum keys between key managers located at long distances.

In addition, the number of preliminary quantum keys may also differ depending on the number of keys stored in the respective key manager key pools.

To help understand the explanation, FIG. 6 shows a quantum cryptography communication network structure according to the first embodiment.

The bolded part of the key pool corresponds to the key pool added before the preliminary-quantum key generation method is applied.

For example, only the adjacent quantum keys $k_{bc}$ and $k_{cd}$ shared with the neighboring key managers b and d are managed in the key pool of the key manager c before the preliminary-quantum key generation method is applied, whereas, in the first embodiment, quantum keys $k_{ac}$ and $k_{ce}$ with the key managers a and e, which are not directly connected, may also be generated in advance through an arbitrary key relay method and stored in the key pool.

Accordingly, when a quantum cryptography service request occurs between the service nodes a and e in the first embodiment, the preliminary quantum keys $k_{ae}$ pre-generated by the service nodes a and e and stored in each key pool may be quickly transmitted, thereby reducing the quantum cryptography service latency.

At this time, a method may be applied to maintain the same number of preliminary quantum keys generated between pairs of key managers.

In addition, the number of preliminary quantum keys may vary depending on the distance between the key managers. For example, a method may be applied to pre-generate a large number of quantum keys between key managers located at short distances, and pre-generate a small number of quantum keys between key managers located at long distances.

In addition, the number of preliminary quantum keys may differ depending on the number of keys stored in each key manager key pool. For example, if the number of keys $k_{ab}$ and the number of keys $k_{bc}$ are small, only a small number of keys $k_{ac}$ generated by relaying $k_{ab}$ and $k_{bc}$ may be pre-generated, whereas if the number of keys $k_{cd}$ and the number of keys $k_{de}$ are large, a large number of keys $k_{ce}$ may be pre-generated.

In addition, in an embodiment of the present disclosure, a second embodiment of generating a calculated quantum key between key managers at a certain distance may be adopted as a method for improving the quantum key resource efficiency of quantum cryptography communication.

That is, the preliminary-key generator 120 generates a preliminary quantum keys between a pair of key managers at pre-defined distances (hops) in the quantum key management layer.

In other words, the preliminary-key generator 120, as shown in FIG. 7, calculates the distances between all pairs of key managers in the quantum key management layer through an arbitrary path calculation algorithm for a given quantum cryptography communication network topology, and the key pool of each key manager stores a preliminary quantum key that the key manager shares with a key manager at a distance of n hops.

Here, the value n may be freely selected by the user, and may be multiple, and may be selected depending on conditions such as network conditions and topology.

In this second embodiment, it is necessary to calculate the distance between the key managers in advance, and at this time, the Dijkstra shortest path calculation method or the like may be applied.

In this case, a method may be applied to maintain the same number of preliminary quantum keys generated between pairs of key managers, and the number of preliminary quantum keys may differ depending on the number of keys stored in each key manager key pool.

To help understanding the explanation, FIG. 8 shows a quantum cryptography communication network structure according to the second embodiment.

This illustrates the case where n is 2, but is not limited thereto.

The bolded part of the key pool corresponds to the key pool added before the preliminary-quantum key generation method is applied.

For example, only the adjacent quantum keys $k_{ab}$ and $k_{bc}$ shared with the neighboring key managers a and c are managed in the key pool of the key manager b before the preliminary-quantum key generation method is applied, whereas, in the second embodiment, the quantum key $k_{bd}$ with the key manager d at a distance of two hops may also be generated in advance through an arbitrary key relay method and stored in the key pool by applying the preliminary-quantum key generation method among all key managers.

Accordingly, when a quantum cryptography service request occurs between the service nodes a and e in the second embodiment, a service quantum keys $k_{ae}$ may be generated by relaying $k_{ab}$, $k_{bd}$, and $k_{de}$ and transmitted to the service node.

Here, since $k_{bd}$ is the preliminary quantum key, the quantum cryptography service latency may be reduced compared to when the preliminary-quantum key generation method is not applied.

At this time, a method may be applied to maintain the same number of preliminary quantum keys generated between pairs of key managers.

In addition, the number of preliminary quantum keys may differ depending on the number of keys stored in each key manager key pool. For example, if the number of keys $k_{ab}$ and the number of keys $k_{bc}$ are small, only a small number of keys $k_{ac}$ generated by relaying $k_{ab}$ and $k_{bc}$ may be pre-generated, whereas if the number of keys $k_{cd}$ and the number of keys $k_{de}$ are large, a large number of keys $k_{ce}$ may be pre-generated.

In addition, in an embodiment of the present disclosure, a third embodiment of generating preliminary quantum keys between all key managers directly connected to the service node may be adopted as a method of improving the quantum key resource efficiency of quantum cryptography communication.

That is, the preliminary-key generator 120 generates preliminary quantum keys between all pairs of key managers directly connected to the service node of the service layer in the quantum key management layer.

In other words, the preliminary-key generator 120, as shown in FIG. 9, searches for/calculates key managers of the quantum key management layer connected to each service node of the service layer for the quantum cryptography communication network topology, and then the key pool of the key manager connected to the service node stores preliminary quantum keys to be shared with key managers connected to all other service nodes.

In this case, a method may be applied to maintain the same number of preliminary quantum keys generated between pairs of key managers.

In addition, the number of preliminary quantum keys may vary depending on the distance between the key managers. For example, a method may be applied to pre-generate a large number of quantum keys between key managers located at short distances, and pre-generate a small number of quantum keys between key managers located at long distances.

In addition, it is obvious that the number of preliminary quantum keys may differ depending on the number of keys stored in each key manager key pool.

To help understanding the explanation, FIG. 10 shows a quantum cryptography communication network structure according to the third embodiment.

In this case, the bolded part of the key pool corresponds to the key pool added before the preliminary-quantum key generation method is applied.

For example, only the adjacent quantum keys $k_{bc}$ and $k_{cd}$ shared with the neighboring key managers b and d are managed in the key pool of the key manager c before the preliminary-quantum key generation method is applied, whereas, in the third embodiment in which preliminary quantum keys are generated between all key managers directly connected to the service node, quantum keys $k_{ac}$ and $k_{ce}$ with the key manager a and e, which are not directly connected, may also be generated in advance through an arbitrary key relay method and stored in the key pool.

Accordingly, when a quantum cryptography service request occurs between the service nodes a and e in the third embodiment, the preliminary quantum key $k_{ae}$ pre-generated by the service nodes a and e and stored in each key pool may be quickly transmitted, thereby reducing the quantum cryptography service latency.

Meanwhile, since key managers b and d do not have directly connected service nodes, they do not store keys through preliminary-quantum key generation.

At this time, a method may be applied to maintain the same number of preliminary quantum keys generated between pairs of key managers.

In addition, the number of preliminary quantum keys may vary depending on the distance between the key managers. For example, a method may be applied to pre-generate a large number of quantum keys between key managers located at short distances, and pre-generate a small number of quantum keys between key managers located at long distances.

In addition, the number of preliminary quantum keys may differ depending on the number of keys stored in each key manager key pool. For example, if the number of keys $k_{ab}$ and the number of keys $k_{bc}$ are small, only a small number of keys $k_{ac}$ generated by relaying $k_{ab}$ and $k_{bc}$ may be pre-generated, whereas if the number of keys $k_{cd}$ and the number of keys $k_{de}$ are large, a large number of keys $k_{ce}$ may be pre-generated.

In addition, in an embodiment of the present disclosure, a fourth embodiment may be adopted to generate preliminary quantum keys between key managers directly connected to a service node at an arbitrary distance as a method of improving the quantum key resource efficiency of quantum cryptography communication.

That is, the preliminary-key generator 120 generates a preliminary quantum key between a pair of key managers directly connected to a service node at predefined distances (hops) between the service nodes in the service layer.

In other words, the preliminary-key generator 120, as shown in FIG. 11, calculates the distance between a pair of service nodes through an arbitrary path calculation algorithm for the service layer of the quantum cryptography communication network topology, and then the key pool of the key manager connected to the service node stores a preliminary quantum key shared with the key manager connected to the service node at a distance of n hops from the corresponding service node.

Here, the value n may be freely selected by the user, may be multiple, and may be selected depending on conditions such as network conditions and topology.

In this fourth embodiment, it is necessary to calculate the distance between the key managers in advance, and at this time, the Dijkstra shortest path calculation method or the like may be applied.

In this case, a method may be applied to maintain the same number of preliminary quantum keys generated between pairs of key managers.

In addition, the number of preliminary quantum keys may differ depending on the distance between the key managers.

To help understand the explanation, FIG. 12 shows a quantum cryptography communication network structure according to the fourth embodiment.

This shows the case where n is 2, but it is not limited thereto.

In this regard, n may be multiple and may be freely selected by the operator.

The bolded part of the key pool corresponds to the key pool added before the preliminary-quantum key generation method is applied.

For example, only the adjacent quantum key $k_{ab}$ shared with the neighboring key manager b is managed in the key pool of the key manager a before the preliminary-quantum key generation method is applied, whereas, in the fourth embodiment, since preliminary quantum keys are generated between the key managers at a distance of any number (n) of hops among the key managers directly connected to the service node, the quantum key $k_{ae}$ with the key manager e connected to the service node e at a distance of 2 hops may also be generated in advance through an arbitrary key relay method and stored in the key pool.

Accordingly, when a quantum cryptography service request occurs between the service nodes a and e in the fourth embodiment, the preliminary quantum keys $k_{ae}$ pre-generated by the service nodes a and e and stored in each key pool may be quickly transmitted, thereby reducing the quantum cryptography service latency.

At this time, a method may be applied to maintain the same number of preliminary quantum keys generated between pairs of key managers.

In addition, the number of preliminary quantum keys may differ depending on the number of keys stored in each key manager key pool. For example, if the number of keys $k_{ab}$, the number of keys $k_{bc}$, the number of keys $k_{cd}$, and the number of keys $k_{de}$ are small, only a small number of keys $k_{ae}$ generated by relaying $k_{ab}$, $k_{bc}$, $k_{cd}$, and $k_{de}$ may be pre-generated, whereas if the number of keys $k_{ab}$, the number of keys $k_{bc}$, the number of keys $k_{cd}$, and the number of keys $k_{de}$ are large, a large number of keys $k_{ae}$ may be pre-generated.

In addition, in an embodiment of the present disclosure, a fifth embodiment that applies an algorithm in consideration of the number of quantum key relays may be adopted as a method to improve the quantum key resource efficiency of quantum cryptography communication.

That is, the preliminary-key generator 120, when generating quantum keys between pairs of arbitrary key managers in the quantum key management layer, generates a preliminary quantum key for a pair of key managers that make the number of quantum key relays using the preliminary quantum key less than a threshold value.

In other words, the preliminary-key generator 120 applies, for example, a sequence of an algorithm shown in FIG. 13.

In the algorithm, G is an adjacent matrix representing the current connection status between key managers. If the key managers a and b are directly connected to each other, G(a, b) = 1, otherwise G is 0.

That is, G may indicate information about the key stored in each key pool. For example, if G(a, b) = 1, it indicates that the key pool of the key manager a stores the quantum key $k_{ab}$ between the key manager a and the key manager b.

In this case, due to the symmetry of the quantum key, if G(a, b) is 1, then G(b, a) is also 1.

In the algorithm, first, among the elements of a key manager set KM, a key manager pair i* and j* satisfying Equation 1 below is selected.

[Equation 1]

$$\{i^*, j^*\} = \operatorname{argmin}_{i,j}[\max(n_{s,d}^{G,i,j})]$$

Here, $n_{s,d}^{G,i,j}$ represents the number of quantum key relays for generating a key between arbitrary key managers s and d on the assumption that key managers i and j each store the key for the other party in their key pools in addition to the given G.

That is, a key manager pair i* and j* that minimizes the maximum number of key relays for generating keys is selected for all key manager pairs s and d, and preliminary-quantum key generation is performed for the selected i* and j*.

In other words, $k_{i^*j^*}$ is generated through the quantum key relay algorithm and stored in the key pool of the key manager i*, and $k_{i^*j^*}$ is also stored in the key pool of the key manager j*.

Now, preliminary-quantum key generation is performed between the key managers i* and j*, so the corresponding information is updated in G.

After that, $\max(n_{s,d}^{G})$ is calculated, and if it is less than an arbitrary threshold C, the algorithm ends, and if it is not less than an arbitrary threshold C, the algorithm repeats the process of finding a new key manager pair.

That is, the algorithm ensures an upper limit of the key request latency of quantum cryptography communication by preventing the number of key relays between all key manager pairs from exceeding a predetermined threshold C.

The threshold C in the algorithm may be set in various ways depending on the network situation, the user's purpose, etc., and the algorithm may prevent excessive preliminary-quantum key generation by selecting key manager pairs one by one, thereby attaining more efficient quantum key resource efficiency.

To help understand the explanation, FIG. 14 shows a quantum cryptography communication network structure according to the fifth embodiment.

G is expressed as a direct connection state between key managers in the initial operation of the algorithm, that is, it includes information about the keys in the key pool that are not marked in bold.

Therefore, only G(a,b), G(b,c), G(c,d), and G(d,e) are expressed as 1, and the rest are expressed as 0.

Afterwards, in addition to the given G information, key manager pairs are selected one by one, and when quantum keys are pre-generated between the corresponding key manager pairs, the number of quantum key relays for quantum key generation between the remaining key managers is calculated.

As a result, the node pair capable of minimizing the maximum number of quantum key relays is selected.

In this regard, when a pair of key managers b and d are selected, the quantum key $k_{ae}$ between the key managers a and e is generated through quantum key relays between $k_{ab}$, $k_{bd}$, and $k_{de}$, so the number of relays is 3, which is the maximum.

Therefore, the algorithm performs preliminary-quantum key generation between the selected pair of key managers b and d, which is expressed as the red part of each key pool.

Since this is based on the assumption that C is 4, the algorithm generates a preliminary quantum key only between the key managers b and d, and then ends.

This method ensures that a quantum key may be generated through three or fewer quantum key relays, regardless of the quantum key generated between any pair of key managers, so the upper limit of the key request latency due to the quantum key relay calculation may be guaranteed.

The service-key generator 130 serves to perform a function of generating a service quantum key.

More specifically, when a quantum cryptography service request occurs in a service node of the service layer, the service-key generator 130 generates a service quantum key for the end-to-end quantum cryptography service of the service node.

At this time, the preliminary-key generator 120 may transmit a preliminary quantum key or a quantum key generated through a quantum key relay that consumes the preliminary quantum key, as a service quantum key for the end-to-end quantum cryptography service of the service node, in response to the quantum cryptography service request.

In this regard, in the first embodiment described above with reference to FIG. 6, when a quantum cryptography service request occurs between the service nodes a and e, the preliminary quantum key $k_{ae}$ pre-generated by the service nodes a and e and stored in each key pool may be quickly transmitted to reduce the quantum cryptography service latency, and in the second embodiment described above with reference to FIG. 8, when a quantum cryptography service request occurs between the service nodes a and e, the service quantum key $k_{ae}$ may be generated by relaying $k_{ab}$, $k_{bd}$, and $k_{de}$ and transmitted to the service node.

In addition, in the third embodiment described above with reference to FIG. 10, when a quantum cryptography service request occurs between the service nodes a and e, the preliminary quantum key $k_{ae}$ pre-generated by the service nodes a and e and stored in each key pool may be quickly transmitted to reduce the quantum cryptography service latency, and in the fourth embodiment described above with reference to FIG. 12, when a quantum cryptography service request occurs between the service nodes a and e, the preliminary quantum key $k_{ae}$ pre-generated by the service nodes a and e and stored in each key pool may be quickly transmitted to reduce the quantum cryptography service latency.

Lastly, in the fifth embodiment described above with reference to FIG. 14, when a quantum cryptography service request occurs between the service nodes a and e, the service quantum key $k_{ae}$ may be generated by relaying $k_{ab}$, $k_{bd}$, and $k_{de}$ and transmitted to the service node.

As described above, according to the configuration of the quantum cryptography service apparatus 100 according to an embodiment of the present disclosure, it can be seen that, by applying a preliminary-quantum key generation method for generating quantum keys in advance between long-distance nodes in the quantum cryptography service, the quantum key support latency due to quantum key relay, which is a disadvantage of quantum cryptography communication compared to existing cryptographic communication, can be reduced, thereby providing low-latency quantum cryptography services and efficiently utilizing expensive quantum resources.

Hereinafter, a quantum cryptography communication service method according to an embodiment of the present disclosure will be described with reference to FIG. 15.

Since the operating entity of the quantum cryptography communication service method according to an embodiment of the present disclosure is the quantum cryptography service apparatus 100, the description will be continued by referring to the corresponding reference numeral below.

First, the quantum cryptography service apparatus 100 generates adjacent quantum keys shared with other key managers directly connected to each key manager for all key managers of the quantum key management layer (S110).

Referring to FIG. 3 described above, in the case where there are five key managers a, b, c, d, and e in the quantum key management layer, an adjacent quantum key $k_{ab}$ between the key managers a and b, an adjacent quantum key $k_{bc}$ between the key managers b and c, an adjacent quantum key $k_{cd}$ between the key managers c and d, and an adjacent quantum key $k_{de}$ between the key managers d and e may be generated and stored in the key pools of the respective key managers.

Then, the quantum cryptography service apparatus 100 generates a preliminary quantum key shared between two long-distance key managers through a quantum key relay that consumes adjacent quantum keys (S120 to S130).

At this time, when a pair of specific key managers that are not directly connected to each other are determined from the connection status between key managers, the quantum cryptography service apparatus 100 may generate a preliminary quantum key through a quantum key relay that consumes key manager-specific adjacent quantum keys that connect the pair of key managers before a quantum cryptography service request occurs in the service layer.

In this regard, in an embodiment of the present disclosure, a first embodiment of generating preliminary quantum keys between all pairs of key managers may be adopted as a method of improving the quantum key resource efficiency of the quantum cryptography communication.

That is, the quantum cryptography service apparatus 100 generates preliminary quantum keys to be shared with all other key managers that are not directly connected to each key manager for all key managers of the quantum key management layer.

In other words, the quantum cryptography service apparatus 100, as shown in FIG. 5 above, searches for/calculates all key managers in the quantum key management layer of the quantum cryptography communication network, and then the key pool of each key manager stores preliminary quantum keys that the key manager shares with all other key managers.

In this case, a method may be applied to maintain the same number of preliminary quantum keys generated between pairs of key managers.

In addition, the number of preliminary quantum keys may vary depending on the distance between the key managers. For example, a method may be applied to pre-generate a large number of quantum keys between key managers located at short distances, and pre-generate a small number of quantum keys between key managers located at long distances.

In addition, the number of preliminary quantum keys may also differ depending on the number of keys stored in the respective key manager key pools.

To help understand the explanation, FIG. 6 above shows a quantum cryptography communication network structure according to the first embodiment.

The bolded part of the key pool corresponds to the key pool added before the preliminary-quantum key generation method is applied.

For example, only the adjacent quantum keys $k_{bc}$ and $k_{cd}$ shared with the neighboring key managers b and d are managed in the key pool of the key manager c before the preliminary-quantum key generation method is applied, whereas, in the first embodiment, quantum keys $k_{ac}$ and $k_{ce}$ with the key managers a and e, which are not directly connected, may also be generated in advance through an arbitrary key relay method and stored in the key pool.

At this time, a method may be applied to maintain the same number of preliminary quantum keys generated between pairs of key managers.

In addition, the number of preliminary quantum keys may vary depending on the distance between the key managers. For example, a method may be applied to pre-generate a large number of quantum keys between key managers located at short distances, and pre-generate a small number of quantum keys between key managers located at long distances.

In addition, the number of preliminary quantum keys may differ depending on the number of keys stored in each key manager key pool. For example, if the number of keys $k_{ab}$ and the number of keys $k_{bc}$ are small, only a small number of keys $k_{ac}$ generated by relaying $k_{ab}$ and $k_{bc}$ may be pre-generated, whereas if the number of keys $k_{cd}$ and the number of keys $k_{de}$ are large, a large number of keys $k_{ce}$ may be pre-generated.

In addition, in an embodiment of the present disclosure, a second embodiment of generating a calculated quantum key between key managers at a certain distance may be adopted as a method for improving the quantum key resource efficiency of quantum cryptography communication.

That is, the quantum cryptography service apparatus 100 generates a preliminary quantum keys between a pair of key managers at pre-defined distances (hops) in the quantum key management layer.

In other words, the preliminary-key generator 120, as shown in FIG. 7 above, calculates the distances between all pairs of key managers in the quantum key management layer through an arbitrary path calculation algorithm for a given quantum cryptography communication network topology, and the key pool of each key manager stores a preliminary quantum key that the key manager shares with a key manager at a distance of n hops.

Here, the value n may be freely selected by the user, and may be multiple, and may be selected depending on conditions such as network conditions and topology.

In this second embodiment, it is necessary to calculate the distance between the key managers in advance, and at this time, the Dijkstra shortest path calculation method or the like may be applied.

In this case, a method may be applied to maintain the same number of preliminary quantum keys generated between pairs of key managers, and the number of preliminary quantum keys may differ depending on the number of keys stored in each key manager key pool.

To help understanding the explanation, FIG. 8 above shows a quantum cryptography communication network structure according to the second embodiment.

This illustrates the case where n is 2, but is not limited thereto.

The bolded part of the key pool corresponds to the key pool added before the preliminary-quantum key generation method is applied.

For example, only the adjacent quantum keys $k_{ab}$ and $k_{bc}$ shared with the neighboring key managers a and c are managed in the key pool of the key manager b before the preliminary-quantum key generation method is applied, whereas, in the second embodiment, the quantum key $k_{bd}$ with the key manager d at a distance of two hops may also be generated in advance through an arbitrary key relay method and stored in the key pool by applying the preliminary-quantum key generation method among all key managers.

At this time, a method may be applied to maintain the same number of preliminary quantum keys generated between pairs of key managers.

In addition, the number of preliminary quantum keys may differ depending on the number of keys stored in each key manager key pool. For example, if the number of keys $k_{ab}$ and the number of keys $k_{bc}$ are small, only a small number of keys $k_{ac}$ generated by relaying $k_{ab}$ and $k_{bc}$ may be pre-generated, whereas if the number of keys $k_{cd}$ and the number of keys $k_{de}$ are large, a large number of keys $k_{ce}$ may be pre-generated.

In addition, in an embodiment of the present disclosure, a third embodiment of generating preliminary quantum keys between all key managers directly connected to the service node may be adopted as a method of improving the quantum key resource efficiency of quantum cryptography communication.

That is, the quantum cryptography service apparatus 100 generates preliminary quantum keys between all pairs of key managers directly connected to the service node of the service layer in the quantum key management layer.

In other words, the preliminary-key generator 120, as shown in FIG. 9 above, searches for/calculates all key managers of the quantum key management layer connected to each service node of the service layer for the quantum cryptography communication network topology, and then the key pool of the key manager connected to the service node stores preliminary quantum keys to be shared with key managers connected to all other service nodes.

In this case, a method may be applied to maintain the same number of preliminary quantum keys generated between pairs of key managers.

In addition, the number of preliminary quantum keys may vary depending on the distance between the key managers. For example, a method may be applied to pre-generate a large number of quantum keys between key managers located at short distances, and pre-generate a small number of quantum keys between key managers located at long distances.

In addition, it is obvious that the number of preliminary quantum keys may differ depending on the number of keys stored in each key manager key pool.

To help understanding the explanation, FIG. 10 above shows a quantum cryptography communication network structure according to the third embodiment.

In this case, the bolded part of the key pool corresponds to the key pool added before the preliminary-quantum key generation method is applied.

For example, only the adjacent quantum keys $k_{bc}$ and $k_{cd}$ shared with the neighboring key managers b and d are managed in the key pool of the key manager c before the preliminary-quantum key generation method is applied, whereas, in the third embodiment in which preliminary quantum keys are generated between all key managers directly connected to the service node, quantum keys $k_{ac}$ and $k_{ce}$ with the key manager a and e, which are not directly connected, may also be generated in advance through an arbitrary key relay method and stored in the key pool.

Meanwhile, since key managers b and d do not have directly connected service nodes, they do not store keys through preliminary-quantum key generation.

At this time, a method may be applied to maintain the same number of preliminary quantum keys generated between pairs of key managers.

In addition, the number of preliminary quantum keys may vary depending on the distance between the key managers. For example, a method may be applied to pre-generate a large number of quantum keys between key managers located at short distances, and pre-generate a small number of quantum keys between key managers located at long distances.

In addition, the number of preliminary quantum keys may differ depending on the number of keys stored in each key manager key pool. For example, if the number of keys $k_{ab}$ and the number of keys $k_{bc}$ are small, only a small number of keys $k_{ac}$ generated by relaying $k_{ab}$ and $k_{bc}$ may be pre-generated, whereas if the number of keys $k_{cd}$ and the number of keys $k_{de}$ are large, a large number of keys $k_{ce}$ may be pre-generated.

In addition, in an embodiment of the present disclosure, a fourth embodiment may be adopted to generate preliminary quantum keys between key managers directly connected to a service node at an arbitrary distance as a method of improving the quantum key resource efficiency of quantum cryptography communication.

That is, the quantum cryptography service apparatus 100 generates a preliminary quantum key between a pair of key managers directly connected to a service node at pre-defined distances (hops) between the service nodes in the service layer.

In other words, the preliminary-key generator 120, as shown in FIG. 11 above, calculates the distance between a pair of service nodes through an arbitrary path calculation algorithm for the service layer of the quantum cryptography communication network topology, and then the key pool of the key manager connected to the service node stores a preliminary quantum key shared with the key manager connected to the service node at a distance of n hops from the corresponding service node.

Here, the value n may be freely selected by the user, may be multiple, and may be selected depending on conditions such as network conditions and topology.

In this fourth embodiment, it is necessary to calculate the distance between the key managers in advance, and at this time, the Dijkstra shortest path calculation method or the like may be applied.

In this case, a method may be applied to maintain the same number of preliminary quantum keys generated between pairs of key managers.

In addition, the number of preliminary quantum keys may differ depending on the distance between the key managers.

To help understand the explanation, FIG. 12 above shows a quantum cryptography communication network structure according to the fourth embodiment.

This shows the case where n is 2, but it is not limited thereto.

In this regard, n may be multiple and may be freely selected by the operator.

The bolded part of the key pool corresponds to the key pool added before the preliminary-quantum key generation method is applied.

For example, only the adjacent quantum key $k_{ab}$ shared with the neighboring key manager b is managed in the key pool of the key manager a before the preliminary-quantum key generation method is applied, whereas, in the fourth embodiment, since preliminary quantum keys are generated between the key managers at a distance of any number (n) of hops among the key managers directly connected to the service node, the quantum key $k_{ae}$ with the key manager e connected to the service node e at a distance of 2 hops may also be generated in advance through an arbitrary key relay method and stored in the key pool.

At this time, a method may be applied to maintain the same number of preliminary quantum keys generated between pairs of key managers.

In addition, the number of preliminary quantum keys may differ depending on the number of keys stored in each key manager key pool. For example, if the number of keys $k_{ab}$, the number of keys $k_{bc}$, the number of keys $k_{cd}$, and the number of keys $k_{de}$ are small, only a small number of keys $k_{ae}$ generated by relaying $k_{ab}$, $k_{bc}$, $k_{cd}$, and $k_{de}$ may be pre-generated, whereas if the number of keys $k_{ab}$, the number of keys $k_{bc}$, the number of keys $k_{cd}$, and the number of keys $k_{de}$ are large, a large number of keys $k_{ae}$ may be pre-generated.

In addition, in an embodiment of the present disclosure, a fifth embodiment that applies an algorithm in consideration of the number of quantum key relays may be adopted as a method to improve the quantum key resource efficiency of quantum cryptography communication.

That is, the quantum cryptography service apparatus 100, when generating quantum keys between pairs of arbitrary key managers in the quantum key management layer, generates a preliminary quantum key for a pair of key managers that make the number of quantum key relays using the preliminary quantum key less than a threshold value.

In other words, the quantum cryptography service apparatus 100 applies, for example, a sequence of the algorithm shown in FIG. 13 above.

In the algorithm, G is an adjacent matrix representing the current connection status between key managers. If the key managers a and b are directly connected to each other, G(a, b) = 1, otherwise G is 0.

That is, G may indicate information about the key stored in each key pool. For example, if G(a, b) = 1, it indicates that the key pool of the key manager a stores the quantum key $k_{ab}$ between the key manager a and the key manager b.

In this case, due to the symmetry of the quantum key, if G(a, b) is 1, then G(b, a) is also 1.

In the algorithm, first, among the elements of a key manager set KM, a key manager pair i* and j* satisfying Equation 1 described above is selected.

That is, a key manager pair i* and j* that minimizes the maximum number of key relays for generating keys is selected for all key manager pairs s and d, and preliminary-quantum key generation is performed for the selected i* and j*.

In other words, $k_{i^*j^*}$ is generated through the quantum key relay algorithm and stored in the key pool of the key manager i*, and $k_{i^*j^*}$ is also stored in the key pool of the key manager j*.

Now, preliminary-quantum key generation is performed between the key managers i* and j*, so the corresponding information is updated in G.

After that, $\max(n_{s,d}^{G})$ is calculated, and if it is less than an arbitrary threshold C, the algorithm ends, and if it is not less than an arbitrary threshold C, the algorithm repeats the process of finding a new key manager pair.

That is, the algorithm ensures an upper limit of the key request latency of quantum cryptography communication by preventing the number of key relays between all key manager pairs from exceeding a predetermined threshold C.

The threshold C in the algorithm may be set in various ways depending on the network situation, the user's purpose, etc., and the algorithm may prevent excessive preliminary-quantum key generation by selecting key manager pairs one by one, thereby attaining more efficient quantum key resource efficiency.

To help understand the explanation, FIG. 14 above shows a quantum cryptography communication network structure according to the fifth embodiment.

G is expressed as a direct connection state between key managers in the initial operation of the algorithm, that is, it includes information about the keys in the key pool that are not marked in bold.

Therefore, only G(a,b), G(b,c), G(c,d), and G(d,e) are expressed as 1, and the rest are expressed as 0.

Afterwards, in addition to the given G information, key manager pairs are selected one by one, and when quantum keys are pre-generated between the corresponding key manager pairs, the number of quantum key relays for quantum key generation between the remaining key managers is calculated.

As a result, the node pair capable of minimizing the maximum number of quantum key relays is selected.

In this regard, when a pair of key managers b and d are selected, the quantum key $k_{ae}$ between the key managers a and e is generated through quantum key relays between $k_{ab}$, $k_{bd}$, and $k_{de}$, so the number of relays is 3, which is the maximum.

Therefore, the algorithm performs preliminary-quantum key generation between the selected pair of key managers b and d, which is expressed as the red part of each key pool.

Since this is based on the assumption that C is 4, the algorithm generates a preliminary quantum key only between the key managers b and d, and then ends.

This method ensures that a quantum key may be generated through three or fewer quantum key relays, regardless of the quantum key generated between any pair of key managers, so the upper limit of the key request latency due to the quantum key relay calculation may be guaranteed.

Afterwards, when a quantum cryptography service request occurs in the service node of the service layer, the quantum cryptography service apparatus 100 generates/transmits a service quantum key for the end-to-end quantum cryptography service of the service node (S140 to S160).

At this time, the quantum cryptography service apparatus 100, in response to the quantum cryptography service request, may transmit a preliminary quantum key or a quantum key generated through a quantum key relay that consumes the preliminary quantum key as a service quantum key for the end-to-end quantum cryptography service of the service node.

In this regard, in the first embodiment described above with reference to FIG. 6, when a quantum cryptography service request occurs between the service nodes a and e, the preliminary quantum key $k_{ae}$ pre-generated by the service nodes a and e and stored in each key pool may be quickly transmitted to reduce the quantum cryptography service latency, and in the second embodiment described above with reference to FIG. 8, when a quantum cryptography service request occurs between the service nodes a and e, the service quantum key $k_{ae}$ may be generated by relaying $k_{ab}$, $k_{bd}$, and $k_{de}$ and transmitted to the service node.

In addition, in the third embodiment described above with reference to FIG. 10, when a quantum cryptography service request occurs between the service nodes a and e, the preliminary quantum key $k_{ae}$ pre-generated by the service nodes a and e and stored in each key pool may be quickly transmitted to reduce the quantum cryptography service latency, and in the fourth embodiment described above with reference to FIG. 12, when a quantum cryptography service request occurs between the service nodes a and e, the preliminary quantum key $k_{ae}$ pre-generated by the service nodes a and e and stored in each key pool may be quickly transmitted to reduce the quantum cryptography service latency.

Lastly, in the fifth embodiment described above with reference to FIG. 14, when a quantum cryptography service request occurs between the service nodes a and e, the service quantum key $k_{ae}$ may be generated by relaying $k_{ab}$, $k_{bd}$, and $k_{de}$ and transmitted to the service node.

As described above, according to the quantum cryptography communication service method according to an embodiment of the present disclosure, it can be seen that, by applying a preliminary-quantum key generation method for generating quantum keys in advance between long-distance nodes in the quantum cryptography service, the quantum key support latency due to quantum key relay, which is a disadvantage of quantum cryptography communication compared to existing cryptographic communication, can be reduced, thereby providing low-latency quantum cryptography services and efficiently utilizing expensive quantum resources.

In the specification (especially in the claims) of the present disclosure, the term "said" and indicative terms similar thereto may be used for both a single element or multiple elements. In addition, if a range is stated in the disclosure, it encompasses embodiments to which respective values within the range are applied (unless otherwise stated), and the respective values constituting the range are regarded as being described in the detailed description of the disclosure.

The steps constituting the method of the present disclosure may be performed in appropriate sequence, unless the order of the steps is explicitly described or described to the contrary. The present disclosure is not necessarily limited to the above-described order of the steps. All examples or the use of exemplary terms (e.g., etc.) in the disclosure is merely intended to described the present disclosure in detail, and the scope of the disclosure is not limited to the examples or exemplary terms, unless limited by the claims. In addition, those skilled in the art will understand that various modifications, combinations, and changes may be configured according to design conditions and elements without departing from the scope of the appended claims or their equivalents.

Therefore, the technical idea of the present disclosure should not be limited to the embodiments described above, and, in addition to the claims, all scopes equivalent to or modified from the claims are considered to fall within the scope of the technical idea of the present disclosure.

## Claims

1. A quantum cryptography service apparatus comprising:

    a memory comprising instructions; and
    a processor configured to generate, by executing the instructions, for all key managers in a quantum key management layer, an adjacent quantum key shared with other key managers directly connected to each key manager, and, when a pair of specific key managers not directly connected to each other are determined from connection status between key managers, generate a preliminary quantum key shared between the pair of specific key managers through a quantum key relay that consumes key manager-specific adjacent quantum keys connecting the pair of specific key managers before a quantum cryptography service request occurs in the service layer.

2. The quantum cryptography service apparatus of claim 1,

    wherein the processor is configured to,
    when a quantum cryptography service request occurs, transmit a preliminary quantum key or a quantum key generated through a quantum key relay that consumes a preliminary quantum key as a service quantum key for an end-to-end quantum cryptography service of a service node.

3. The quantum cryptography service apparatus of claim 1,

    wherein the processor is configured to,
    for all key managers in the quantum key management layer, generate preliminary quantum keys shared with all other key managers, respectively, that are not directly connected to each key manager.

4. The quantum cryptography service apparatus of claim 1,
    wherein the processor is configured to generate a preliminary quantum key between a pair of key managers at pre-defined distances (hops) in the quantum key management layer.

5. The quantum cryptography service apparatus of claim 1,
    wherein the processor is configured to generate preliminary quantum keys between all pairs of key managers directly connected to service nodes of the service layer in the quantum key management layer.

6. The quantum cryptography service apparatus of claim 1,
    wherein the processor is configured to generate a preliminary quantum key between a pair of key managers directly connected to service nodes at pre-defined distances (hops) between service nodes in the service layer.

**7.** The quantum cryptography service apparatus of claim 1,
wherein the processor is configured to generate a preliminary quantum key for a pair of key managers that make the number of quantum key relays using preliminary quantum keys less than a threshold value when generating quantum keys between any pair of key managers in the quantum key management layer.

**8.** A quantum cryptography communication service method performed in a quantum cryptography service apparatus, the method comprising:

generating, for all key managers in a quantum key management layer, an adjacent quantum key shared with other key managers directly connected to each key manager; and
when a pair of specific key managers not directly connected to each other are determined from connection status between key managers, generating a preliminary quantum key shared between the pair of specific key managers through a quantum key relay that consumes key manager-specific adjacent quantum keys connecting the pair of specific key managers before a quantum cryptography service request occurs in the service layer.

**9.** The quantum cryptography communication service method of claim 8,
further comprising transmitting, when a quantum cryptography service request occurs, a preliminary quantum key or a quantum key generated through a quantum key relay that consumes a preliminary quantum key as a service quantum key for an end-to-end quantum cryptography service of a service node.

**10.** The quantum cryptography communication service method of claim 8,

wherein the generating of the preliminary quantum key comprises
generating, for all key managers in the quantum key management layer, preliminary quantum keys shared with all other key managers, respectively, that are not directly connected to each key manager.

**11.** The quantum cryptography communication service method of claim 8,

wherein the generating of the preliminary quantum key comprises
generating a preliminary quantum key between a pair of key managers at pre-defined distances (hops) in the quantum key management layer.

**12.** The quantum cryptography communication service method of claim 8,

wherein the generating of the preliminary quantum key comprises
generating preliminary quantum keys between all pairs of key managers directly connected to service nodes of the service layer in the quantum key management layer.

**13.** The quantum cryptography communication service method of claim 8,

wherein the generating of the preliminary quantum key comprises
generating a preliminary quantum key between a pair of key managers directly connected to service nodes at pre-defined distances (hops) between service nodes in the service layer.

**14.** The quantum cryptography communication service method of claim 8,

wherein the generating of the preliminary quantum key comprises
generating a preliminary quantum key for a pair of key managers that make the number of quantum key relays using preliminary quantum keys less than a threshold value when generating quantum keys between any pair of key managers in the quantum key management layer.

**15.** A computer program stored in a medium for executing, in combination with hardware, the method of any one of claims 8 to 14.

FIG. 1

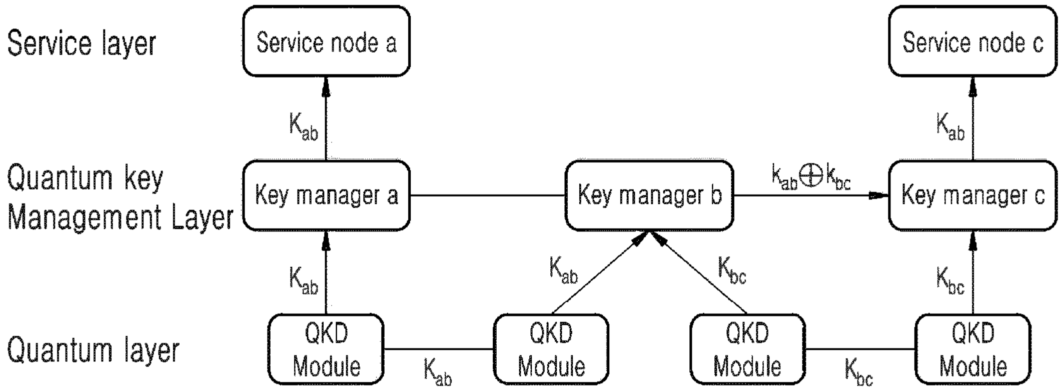


FIG. 2

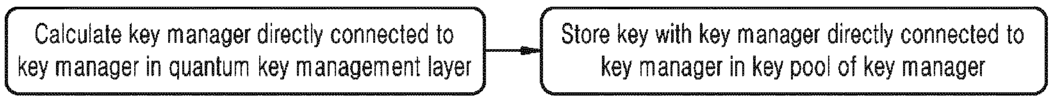


FIG. 3

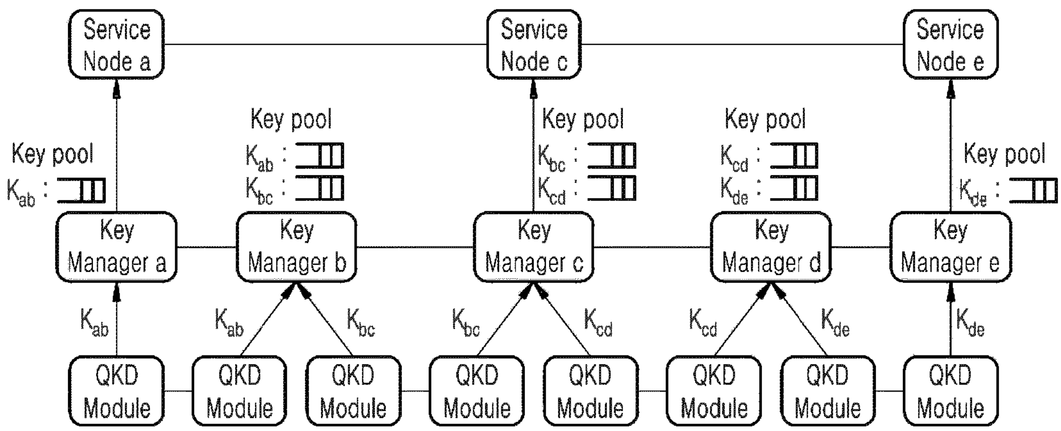

FIG. 4

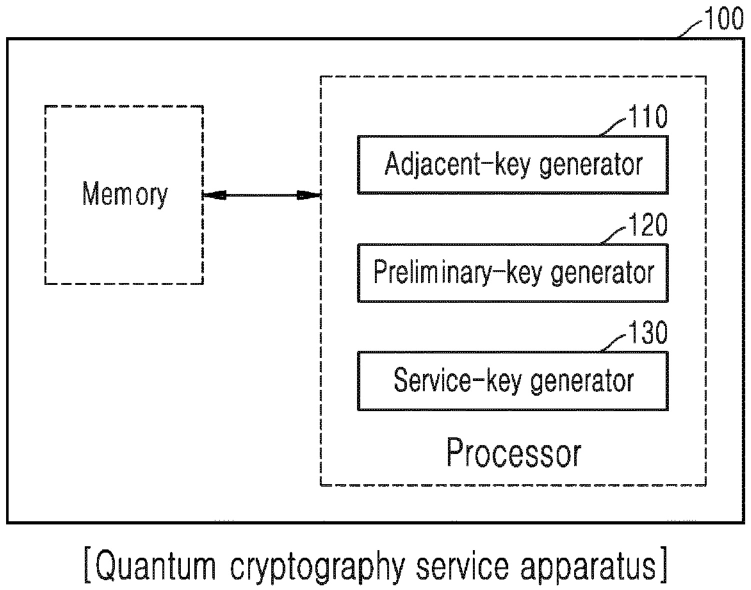


FIG. 5

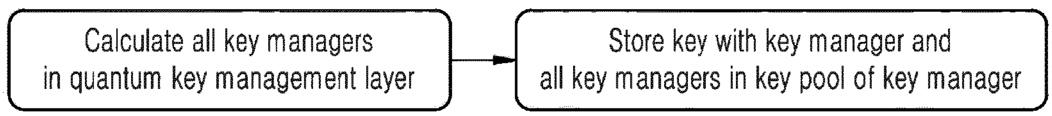


FIG. 6

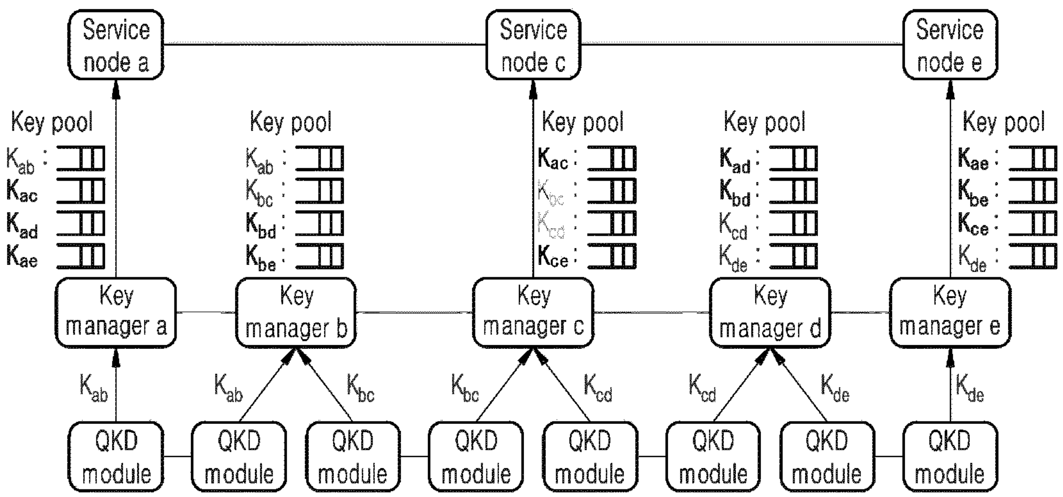

FIG. 7

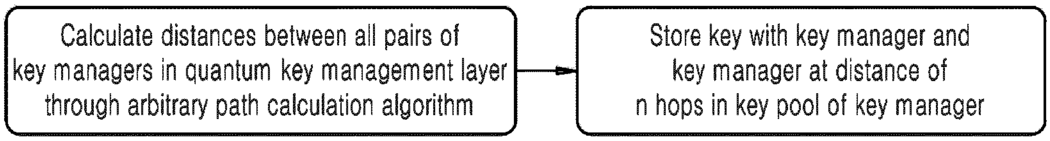


FIG. 8

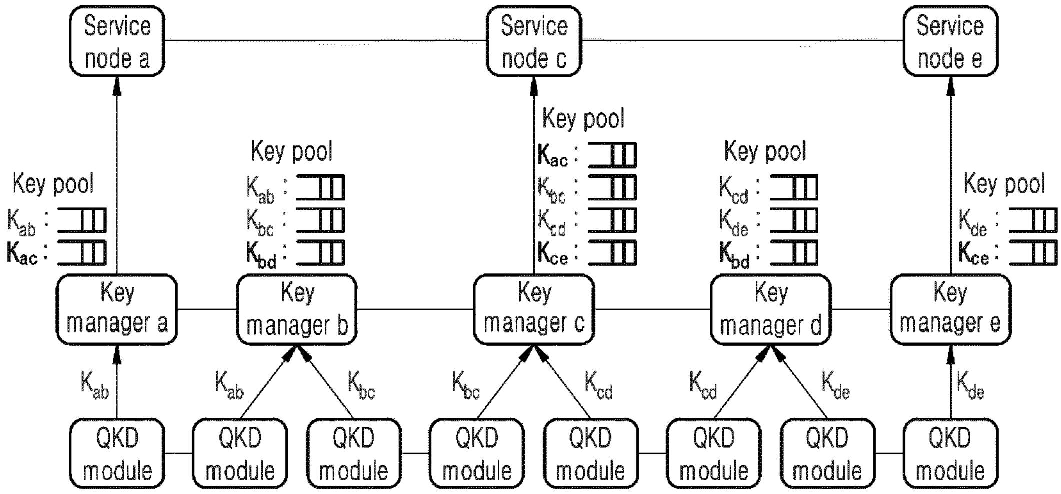


FIG. 9

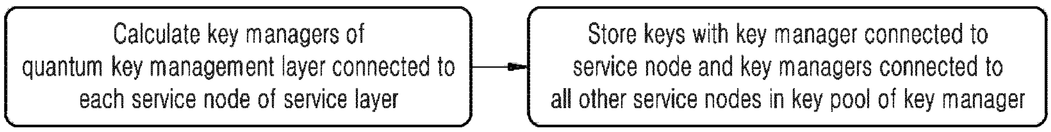

FIG. 10

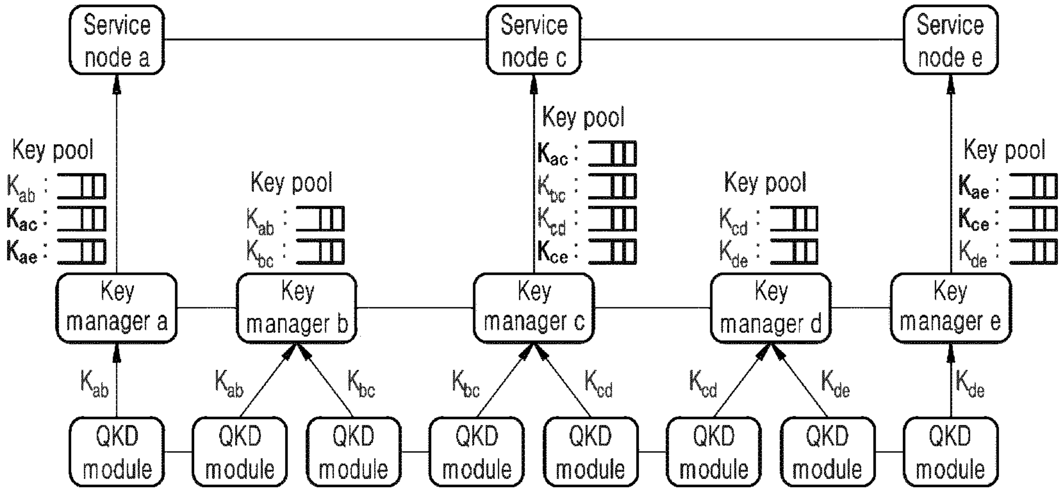


FIG. 11

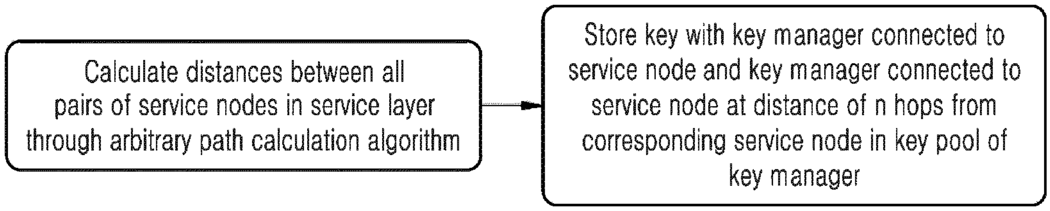


FIG. 12

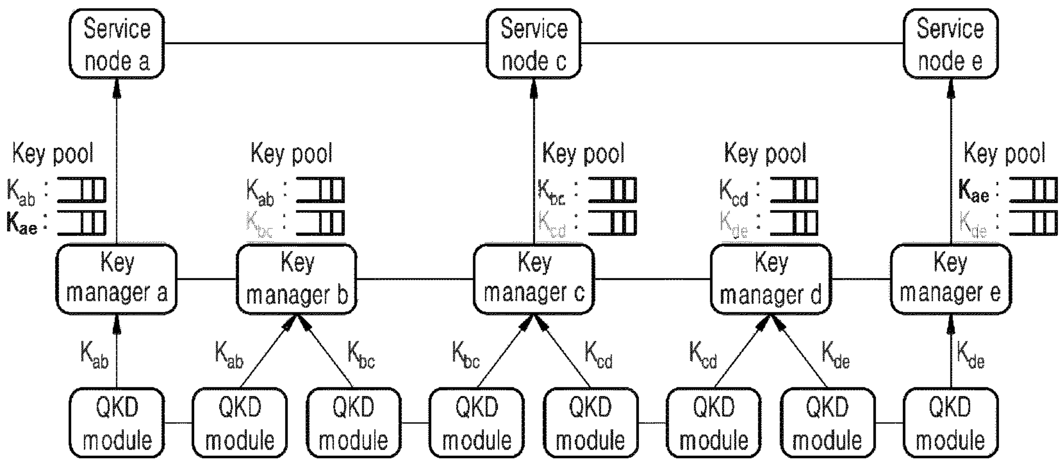

FIG. 13

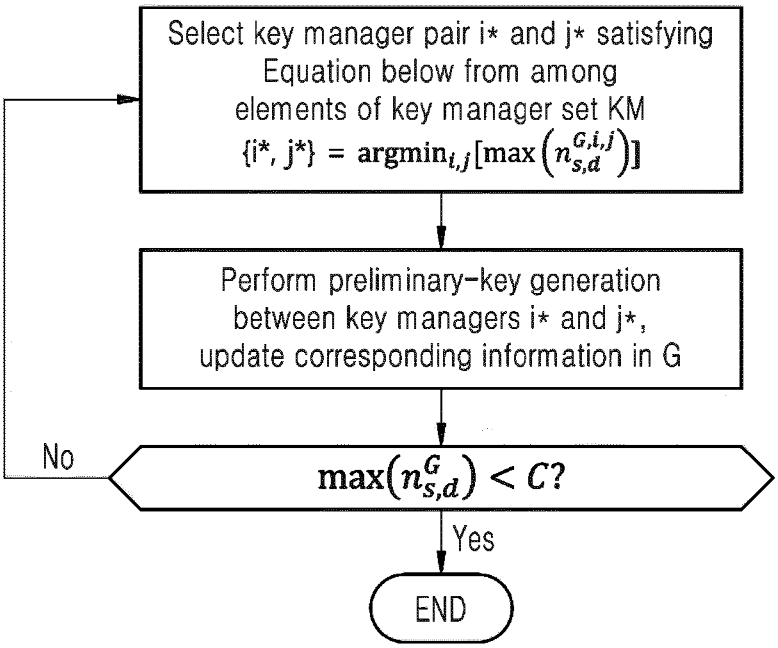
Select key manager pair i* and j* satisfying Equation below from among elements of key manager set KM
$\{i^*, j^*\} = \mathrm{argmin}_{i,j}[\max(n_{s,d}^{G,i,j})]$
Perform preliminary-key generation between key managers i* and j*, update corresponding information in G
$\max(n_{s,d}^{G}) < C?$
No
Yes
END

FIG. 14

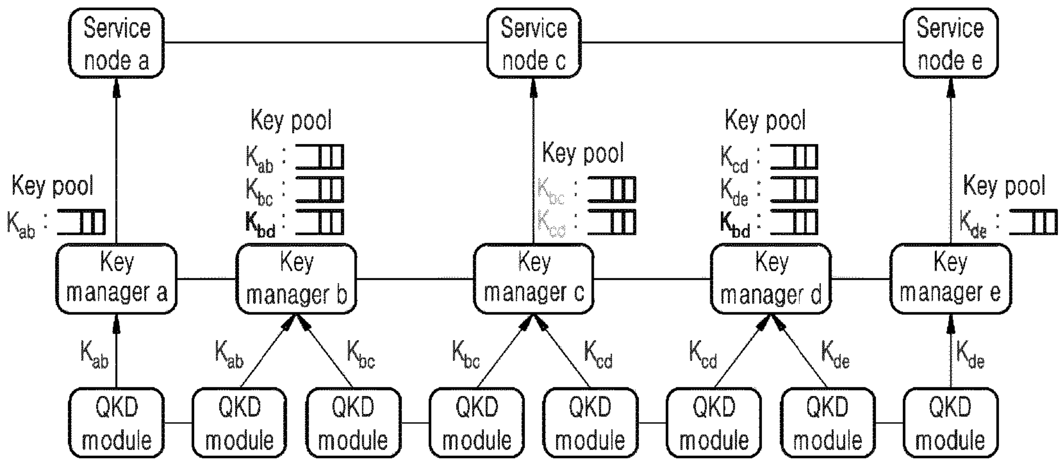
Service node a
Service node c
Service node e
Key pool
$K_{ab}$ :
Key pool
$K_{ab}$ :
$K_{bc}$ :
$K_{bd}$ :
Key pool
$K_{bc}$ :
$K_{cd}$ :
Key pool
$K_{cd}$ :
$K_{de}$ :
$K_{bd}$ :
Key pool
$K_{de}$ :
Key manager a
Key manager b
Key manager c
Key manager d
Key manager e
$K_{ab}$
$K_{ab}$
$K_{bc}$
$K_{bc}$
$K_{cd}$
$K_{cd}$
$K_{de}$
$K_{de}$
QKD module
QKD module
QKD module
QKD module
QKD module
QKD module
QKD module
QKD module

FIG. 15

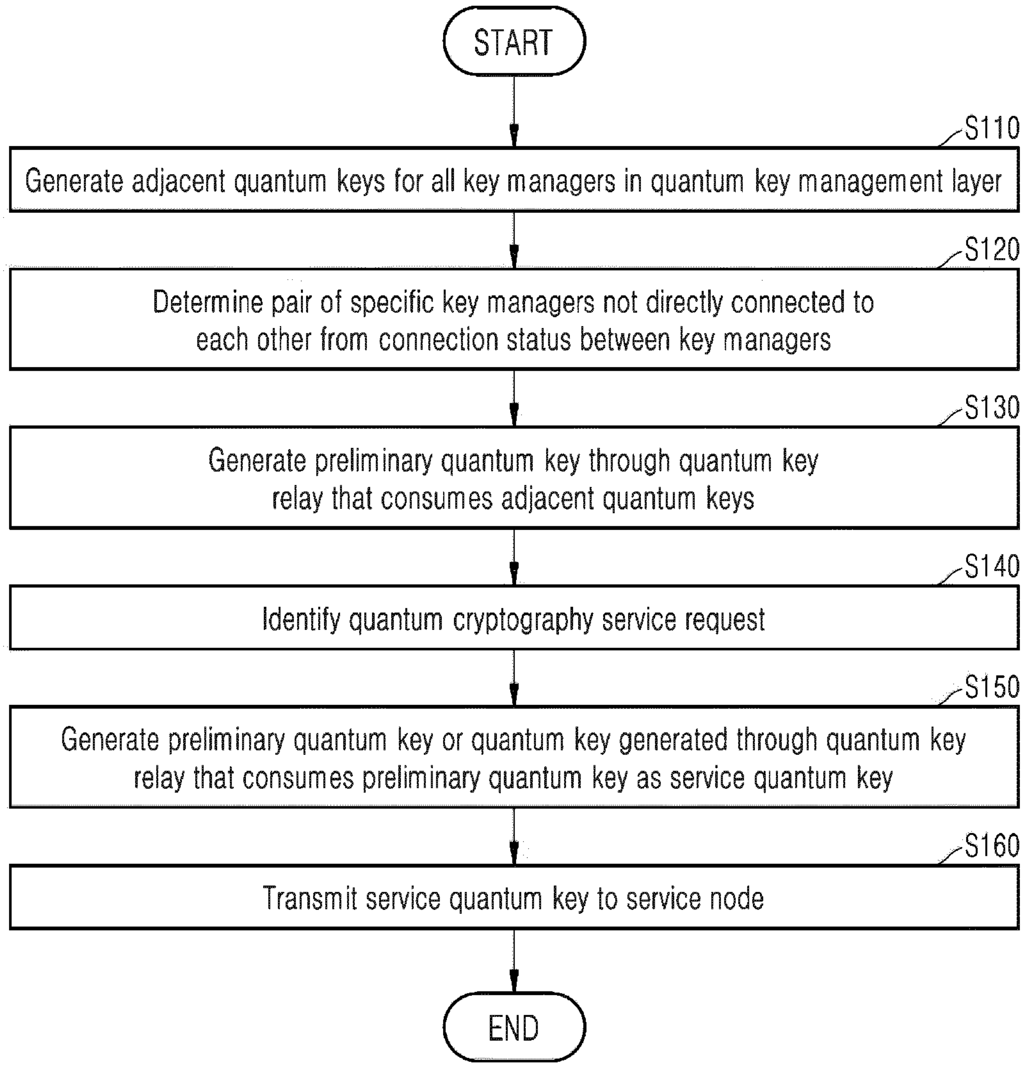
START
S110
Generate adjacent quantum keys for all key managers in quantum key management layer
S120
Determine pair of specific key managers not directly connected to each other from connection status between key managers
S130
Generate preliminary quantum key through quantum key relay that consumes adjacent quantum keys
S140
Identify quantum cryptography service request
S150
Generate preliminary quantum key or quantum key generated through quantum key relay that consumes preliminary quantum key as service quantum key
S160
Transmit service quantum key to service node
END

Europäisches Patentamt
European Patent Office
Office européen des brevets

# EUROPEAN SEARCH REPORT

Application Number
EP 25 17 5904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EMIR DERVISEVIC ET AL: "Quantum Key Distribution Networks -- Key Management: A Survey", ARXIV.ORG, CORNELL UNIVERSITY LIBRARY, 201 OLIN LIBRARY CORNELL UNIVERSITY ITHACA, NY 14853, 8 August 2024 (2024-08-08), XP091848146, | 1-3,5, 8-10,12, 15 | INV. H04L9/08 |
| A | * section 1, 2; figure 3 * | 4,6,7, 11,13,14 | |
| | ----- | | |
| X | US 2022/294616 A1 (PARRY THOMAS OWEN [CA] ET AL) 15 September 2022 (2022-09-15) | 1-3,5, 8-10,12, 15 | |
| A | * paragraph [0046] * | 4,6,7, 11,13,14 | |
| | ----- | | |
| X | US 2023/299941 A1 (YU YU [JP] ET AL) 21 September 2023 (2023-09-21) | 1-3,5, 8-10,12, 15 | |
| A | * paragraph [0032] - paragraph [0067]; figure 5 * | 4,6,7, 11,13,14 | |
| | ----- | | |

TECHNICAL FIELDS SEARCHED (IPC)

H04L

The present search report has been drawn up for all claims

1

| Place of search | Date of completion of the search | Examiner |
|---|---|---|
| Munich | 19 September 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 17 5904

This annex lists the patent family members relating to the patent documents cited in the above-mentioned European search report. The members are as contained in the European Patent Office EDP file on
The European Patent Office is in no way liable for these particulars which are merely given for the purpose of information.

19-09-2025

| Patent document cited in search report | Publication date | Patent family member(s) | Publication date |
|---|---|---|---|
| US 2022294616 A1 | 15-09-2022 | EP 4060931 A1 | 21-09-2022 |
| | | US 2022294616 A1 | 15-09-2022 |
| US 2023299941 A1 | 21-09-2023 | EP 4246874 A1 | 20-09-2023 |
| | | JP 7646592 B2 | 17-03-2025 |
| | | JP 2023136936 A | 29-09-2023 |
| | | US 2023299941 A1 | 21-09-2023 |

EPO FORM P0459

For more details about this annex : see Official Journal of the European Patent Office, No. 12/82